Europäisches Patentamt

European Patent Office

Office européen des brevets

(11) Publication number: **0 274 046 B1**

# EUROPEAN PATENT SPECIFICATION

(45) Date of publication of patent specification: **22.04.92**    (51) Int. Cl.⁵: **G05B 13/02**, G05B 19/19

(21) Application number: **87117430.6**

(22) Date of filing: **26.11.87**

(54) **Power servo system.**

(30) Priority: **05.12.86 US 938259**

(43) Date of publication of application:
**13.07.88 Bulletin 88/28**

(45) Publication of the grant of the patent:
**22.04.92 Bulletin 92/17**

(84) Designated Contracting States:
**DE FR GB IT SE**

(56) References cited:
**EP-A- 0 111 064**
**EP-A- 0 204 277**
**DE-A- 1 523 552**
**US-A- 4 243 923**
**US-A- 4 349 868**

**Compensation par retour d'état", course notes by A. Fossard, pages 16-25**

(73) Proprietor: **Vickers, Incorporated**
**1401 Crooks Road**
**Troy Michigan 48084(US)**

(72) Inventor: **El-Ibiary, Yehia M.**
**5947 Diamond**
**Troy Michigan 48098(US)**
Inventor: **Leemhuis, Richard S.**
**3494 Eagle**
**Troy Michigan 48083(US)**

(74) Representative: **Blumbach Weser Bergen**
**Kramer Zwirner Hoffmann Patentanwälte**
**Sonnenberger Strasse 100**
**W-6200 Wiesbaden 1(DE)**

# EP 0 274 046 B1

**Description**

The present invention relates to a power servo system as disclosed in EP-A-204,277 of same applicant.

In a known servocontrol system (US-A-4,243,923) torque and force is sensed at the actuator and fed back to a circuit which forms the difference between the command signal and the feedback signal, wherein the feedback signal has been formed by an accommodation branch which generates velocity modification commands. The difference signal is converted into a desired command format expressed in the coordinates of the degrees of freedom of the actuator. Furthermore, a computer is included in the command circuitry, not in the loop. The sensors used increase significantly the overall costs of the system and are sensitive to environal noise so reducing reliability of the system.

In a further known closed loop servo control system (DE-A-1,523,552) a calculator is provided for calculating the actual loop coefficients based on values obtained from the loop. The system has a self correction feature to be optimized through parameters change. A regulator included in the loop has deadbeat response and works without a z-transformation. When calculating the transfer function of the regulator, linear differential equations with constant coefficients are used. A feedback compensator is not provided. The system is disclosed in mathematical terms and shows little means for carrying out the system.

In a further known closed loop servo control system (US-A-4,349,868) the loop gain transfer functions are dynamically adjusted in response to changes in any of the loop sampling interval, process time constants or transducer propagation delay. The gains used are obtained via trial and error and through iteration technique, and this can be time-consuming. Furthermore, the number of the gains available often is not enough to control the system precisely. Contrary to invention, the measured output and eventually the time-derivative thereof are the feedback signals in the loop, yet there is no feedback compensation means to handle the feedback signal according to a preselected second transfer function. Furthermore, system constants are not estimated.

It is conventional practice in the art of electrohydraulic servo control systems to provide a command signal indicative of position, velocity, acceleration or pressure desired at the controlled mechanism, to measure actual position, velocity and acceleration at the controlled mechanism by means of corresponding transducers, and to drive a hydraulic actuator with an error signal representative of a difference between the command signal and the measured motion variables. Provision of three transducers mounted on or otherwise responsive to the controlled mechanism increases significantly the overall expense of the servo system while at the same time reducing overall reliability. The aforementioned deficiencies are particularly acute in the field of industrial robotics where interested in cost, simplicity and reliability is continually increasing.

EP-A-111,064 = US-A-4,502,109 discloses a power servo system having three dynamic state variables, namely position, velocity and acceleration. A control system includes a sensor coupled to an hydraulic actuator for measuring load position, and a digital observer responsive to measured position for estimating velocity and acceleration. Signals indicative of measured and/or estimated state variables are compared with an input state command signal to obtain a difference or error signal which drives the actuator. The observer electronics includes a digital microprocessor suitably programmed to estimate the state variables as solutions to corresponding linear equations. The several equation constants, which are functions of actuator and driven mass characteristics, are entered through a corresponding multiplicity of operator-adjustable resistors. This can be quite time consuming , placing limitations on speed of operation and the number of tasks that can be performed. Furthermore, the requirement that system constants be loaded into the observer system limits adaptability of the system for changing conditions, such as wear or hydraulic fluid pressure variation.

The object of the power servo system, to which the present invention relates, was to provide a servo control system which is self-adaptive in operation, i.e., which periodically updates some or all system constants to accomodate changing conditions, and which is configured to obtain improved speed of calculation.

Such power servo system (EP-A-204,277) remained economical and reliable to implement.

The problem to be solved by the invention is to provide a power servo system of the described character having improved velocity and/or static gain characteristics. The static gain and/or velocity constant is to be selectable independently of other system variables.

EP-A-204,277 discloses sampled-data feedback control systems wherein control is obtained by sampling the various control and error signals at discrete periodic intervals. Sampled-data control systems of this character are to be distinguished from continuous analog control systems. For purposes of disclosure and description, it is convenient to consider construction and operation of the sampled data feedback

2

control system in the so-called sampled-data or Z-transform domain. In systems of the subject type, which may be described by linear difference equations with constants that do not vary significantly between sample intervals, Z transformation of system transfer functions yields rational polynomial ratios in the variable "Z". This variable is complex and is related to the more-recognized Laplace transform variable "S" by the equation:

$$Z = e^{TS} \qquad (1),$$

where T is sampling interval. Indeed, in Z-transform theory, such concepts as transfer functions, mapping theorems, combinatorial theorems and inversions are related to sampled-data systems in a manner in many ways comparable to the relationship of the Laplace transformation to continuous systems. A more complete discussion of sampled-data control systems and Z-transform theory is provided in Ragazzini and Frankling,"Sampled-Data Control Systems", Mc-Graw-Hill (1958).

In accordance with the embodiments disclosed in EP-A-204,277, a sampled-data control system receives and samples input signals indicative of desired and actual motion at a hydraulic actuator and load, and provides control signals to the actuator necessary to obtain desired motion. The sampled-data control system includes digital processing circuitry with series and feedback compensation, coordinated with hydraulic system behavior function, to form a complete closed-loop control system operating in the sampled-data or Z-transform domain. Different equation constants in the series and feedback compensation circuitry are recalculated at each sampling interval. In one embodiment such constants are recalculated as a function of system behavior, so that system control automatically varies with operating conditions or load. In another embodiment system constants are calculated based upon a single operator-variable (or remote system) input, which accommodates rapid operator-implemented tracking of system behavior while reducing calculation time.

The embodiments of the present invention feature additional sampled data domain orders in the series and feedback compensation circuitry, which permit static gain and/or velocity constant to be selected independently of other system variables.

The invention, together with additional objects, features and advantages thereof, will be best understood from the following description, the appended claims and the accompanying drawings in which

Fig. 1 is a functional block diagram of a basic hydraulic control system in accordance with EP-A-204,277,

Fig. 2 is a functional block diagram of a first embodiment of the present invention,

Fig. 3 is a functional block diagram of a second embodiment of the present invention,

Fig. 4 is a detail of the controller of Figs. 1, 2, or 3,

Fig. 5 is an alternative detail of the controller of Fig. 1, 2 or 3,

Fig. 6 are graphic illustrations of the operation of the system,

Figs. 7 and 8, taken together, is a drawing of an electronic controller.

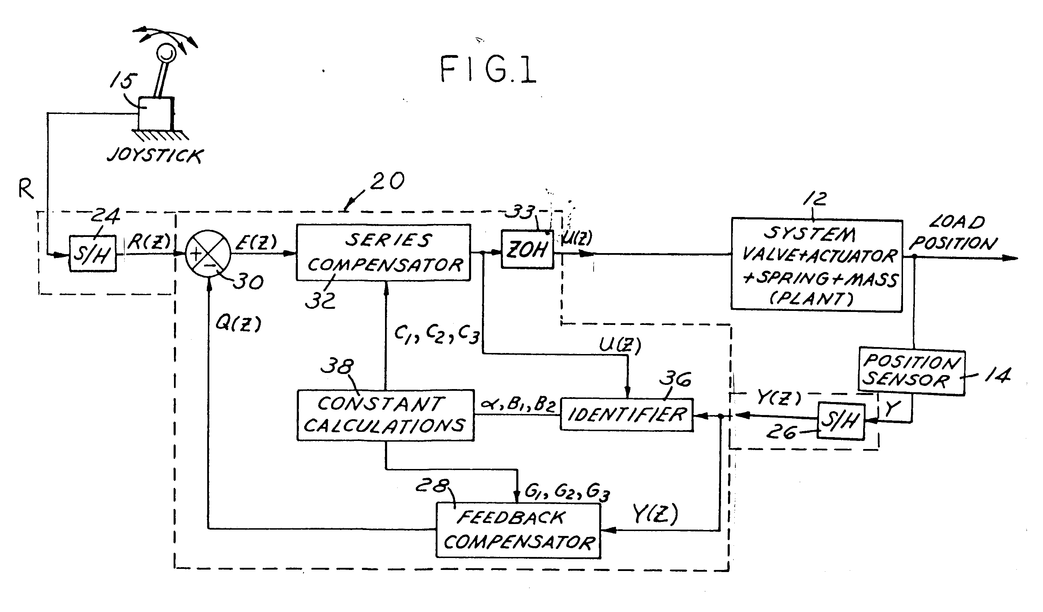

Fig. 1 illustrates a load position command system as comprising a valve + actuator + spring + mass system or plant 12, a position sensor or transducer 14, a sampled-data control means 20 and a joystick 15 for delivering command signals R. The position sensor 14 is suitably mechanically coupled to the actuator and load to provide an electrical output signal Y as a function of actual actuator and load position, Signal Y by the position sensor 14 is Z-transformed to a sampled signal Y(Z) by a sample-and-hold circuit 26. Similarly, signal R is converted to sampled signal R(Z) by sample-and-hold circuit 24.

The sampled-data control means 20 comprises circuits 24, 26 and a feedback compensator 28 that receives the output Y(Z) of circuit 26 and provides a feedback or compensation signal Q(Z) to one input of a summer 30. Summer 30 receives a second input R(Z) from circuit 24, and provides a difference or error signal E(Z) to a series compensator 32. Compensator 32 provides a drive signal U(Z) through a zero-order-hodl circuit 33 to plant 12.

For an electrohydraulic plant 12, including a hydraulic valve, actuator and spring, it can be shown that the transfer function of plant 12 in the sampled-data domain is:

$$\frac{B_1 Z^2 + B_2 Z + B_3}{Z^3 + \alpha_1 Z^2 + \alpha_2 Z + \alpha_3} \qquad (2)$$

wherein $B_1$, $B_2$, $B_3$, $\alpha_1$, $\alpha_2$, and $\alpha_3$ are constant functions of plant parameters and sampling time.

3

Assuming zero damping, expression (2) reduces to:

$$\frac{B_1 Z^2 + B_2 Z + B_1}{Z^3 - \alpha Z^2 + \alpha Z - 1} \qquad (3)$$

$B_1$, $B_2$ and $\alpha$ are given by the equations:

$$\alpha = 2\cos\omega T + 1 \qquad (4)$$

$$B_1 = K_5 \left( T - \frac{\sin\omega T}{\omega} \right) \qquad (5)$$

$$B_2 = 2K_5 \left( \frac{\sin\omega T}{\omega} - T\cos\omega T \right) \qquad (6)$$

where $K_5$ is a gain constant, $T$ is sampling period and $\omega$ is neutral stability resonant frequency of plant 12. All of these constants are measurable or estimatable. The transfer function of system or plant 12 is thus predetermined as a function of plant characteristics.

The orders of the Z-domain transfer functions of compensator 28, 32 are selected to obtain desired step response and computation time. In EP-A-204,277 the transfer function of compensator 28 was:

$$Q(Z) = \frac{(G_1 Z^2 + G_2 Z + G_3)}{P(Z)} Y(Z) \qquad (7)$$

and the transfer function of compensator 32 is:

$$U(Z) = \left[ \frac{P(Z)}{Z^3 + C_1 Z^2 + C_2 Z + C_3} \right] E(Z) \qquad (8)$$

where $G_1$, $G_2$, $G_3$, $C_1$, $C_2$ and $C_3$ are constants, and $P(Z)$ is a polynomial in Z which, in the preferred embodiments of the invention hereinafter discussed, is set equal to unity.

For the overall system to be stable, including plant 12 and controller 20, all poles must be within the Z-plane unit circle. Ragazzini and Franklin, supra at ch. 4. The overall closed-loop transfer function, embodying the individual functions of expressions (3), (7) and (8), is a sixth order expression in Z. Thus, six poles are needed. Choosing all six poles at location -a within the Z-plane unit circle means that

$$(Z-e^{-aT})^6 = Z^6 - 6e^{-aT}Z^5 + 15e^{-2aT}Z^4 - 20e^{-3aT}Z^3 + 15e^{-4aT}Z^2 - 6e^{-5aT}Z + e^{-6aT} \qquad (9)$$

Combining exp-ressions (2), (6) and (7), and equation coefficients with corresponding coefficients in equation (8), yields:

4

$$C_1 = \alpha - 6 \, e^{-aT}$$

$$
\begin{bmatrix}
0 & 0 & B_1 & 0 & -1 \\
0 & B_1 & B_2 & -1 & \alpha \\
B_1 & B_2 & B_1 & \alpha & -\alpha \\
B_2 & B_1 & 0 & -\alpha & 1 \\
B_1 & 0 & 0 & 1 & 0
\end{bmatrix}
\begin{bmatrix}
G_1 \\ G_2 \\ G_3 \\ C_2 \\ C_3
\end{bmatrix}
=
\begin{bmatrix}
e^{-6aT} \\
-6e^{-5aT} \\
\alpha - 6e^{-aT} + 15e^{-4aT} \\
1 - \alpha^2 + 6\alpha \, e^{-aT} - 20 \, e^{-3aT} \\
\alpha^2 - 6\alpha \, e^{-aT} - \alpha + 15e^{-2aT}
\end{bmatrix}
\qquad (10)
$$

For a given value of pole location -a, and values of constants $B_1$, $B_2$ and $\alpha$ per equations (4)-(6), equation (10) can be solved for constants $G_1$, $G_2$, $G_3$, $C_1$, $C_2$, $C_3$.

The constants $\alpha$, $B_1$ and $B_2$ can be continuously estimated and updated based upon system performance, and the internal transfer function constants $C_1$, $C_2$, $C_3$ and $G_1$, $G_2$, $G_3$ are likewise updated to obtain desired performance. To that end, an identifier 36 receives the Z-transformed position output Y(Z) of circuit 26 and the Z-domain drive signal U(Z) from compensator 32. Identifier 32 estimates constants $\alpha$, $B_1$ and $B_2$ as will be described, and feeds such estimated constants to the circuit block 38 wherein constants $C_1$, $C_2$, $C_3$ and $G_1$, $G_2$, $G_3$ are calculated per equation (10). The latter constants are then fed to associated compensators 32, 28.

Briefly stated, identifier 36 estimates constants $\alpha$, $B_1$ and $B_2$ periodically as a function of drive signal U-(Z) and system response Y(Z) thereto over a number of preceding intervals corresponding to the order of the system. More specifically, at sample time (KT-2T), the discrete equation of plant 12 is:

$$Y_{k-2} - \alpha Y_{k-3} + \alpha Y_{k-4} - Y_{k-5} = B_1 U_{k-3} + B_2 U_{k-4} + B_1 U_{k-5} \qquad (11),$$

At time (KT-T), such equation is:

$$Y_{k-1} - \alpha Y_{k-2} + \alpha Y_{k-3} - Y_{k-4} = B_1 U_{k-2} + B_2 U_{k-3} + B_1 U_{k-4} \qquad (12)$$

And at time (kT) :

$$Y_k - \alpha Y_{k-1} + \alpha Y_{k-2} - Y_{k-3} = B_1 U_{k-1} + B_2 U_{k-2} + B_1 U_{k-3} \qquad (13)$$

Equations (11)-(13) may be combined and rearranged as follows:

$$
\begin{bmatrix}
(Y_{k-4} - Y_{k-3}) & -(U_{k-3} + U_{k-5}) & -U_{k-4} \\
(Y_{k-3} - Y_{k-2}) & -(U_{k-2} + U_{k-4}) & -U_{k-3} \\
(Y_{k-2} - Y_{k-1}) & -(U_{k-1} + U_{k-3}) & -U_{k-2}
\end{bmatrix}
\begin{bmatrix}
\alpha \\ B_1 \\ B_2
\end{bmatrix}
=
\begin{bmatrix}
Y_{k-5} - Y_{k-2} \\
Y_{k-4} - Y_{k-1} \\
Y_{k-3} - Y_k
\end{bmatrix}
\qquad (14).
$$

The values of Y(Z) and U(Z) are physically sampled and stored over the required number of intervals, i.e. six for a third order plant, and constants $\alpha$, $B_1$ and $B_2$ are estimated accordingly per equation (14).

Estimation of constants $\alpha$, $B_1$ and $B_2$ per equation (14) has been found to be more time-consuming than desirable for real-time control applications. It will be noted from equations (4)-(6) that $B_1$ and $B_2$ can be determined from $\alpha$ based upon the common factor $\omega$. Therefore, identifier 36 first estimates $\alpha$, and then estimates $B_1$ and $B_2$ from $\alpha$. However, such computation based upon equations (4)-(6) involving trigometric functions would be too time consuming. Accordingly, equations (4)-(6) are first rewritten using Taylor series expansion, and neglecting higher-order terms, as follows:

$$\alpha = 3 - (\omega T)^2 \left[ 1 - \frac{(\omega T)^2}{12} \right] \qquad (15)$$

$$B_1 = \frac{\omega^2 T^3}{G} \left[ 1 - \frac{(\omega T)^2}{20} \right] \qquad (16)$$

$$B_2 = \frac{2 \omega^2 T^3}{3} \left[ 1 - \frac{(\omega T)^2}{10} \right] \qquad (17) .$$

Defining $(\omega T)^2$ as Y, and solving equation (15) for Y yields

$$Y = 6 \pm 2(3\alpha)^{\frac{1}{2}} \qquad (18)$$

The positive sign yields a trivial solution and is ignored. The result:

$$B_1 = \frac{TY}{6} \left( 1 - \frac{Y}{20} \right) \qquad (19)$$

$$B_2 = \frac{2TY}{3} \left( 1 - \frac{Y}{10} \right) \qquad (20)$$

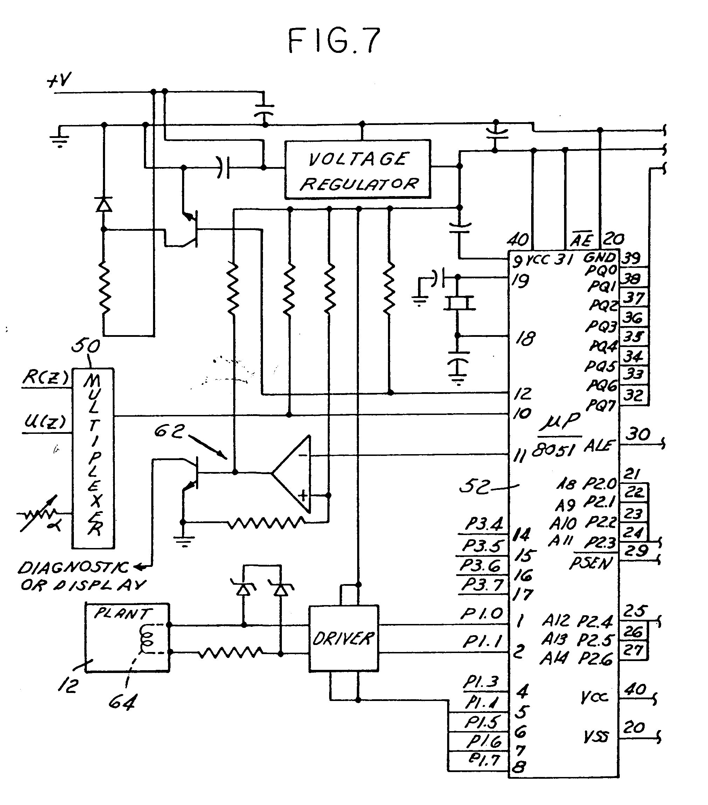

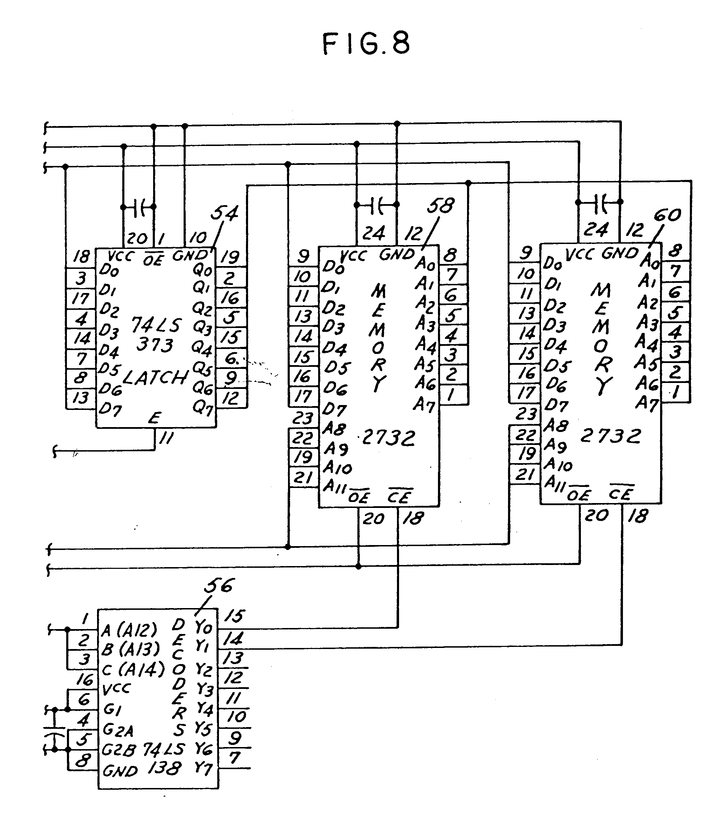

Thus, constant $\alpha$ is determined per equation (14), and constants $B_1$ and $B_2$ are determined per equations (18)-(20). It has been found, somewhat surprisingly, using the specific embodiment of Figs. 7 and 8, that estimation of $B_1$ and $B_2$ per equations (18)-(20) is not only faster than solution of equation (14) for $\alpha$, $B_1$ and $B_2$, but is also more accurate.

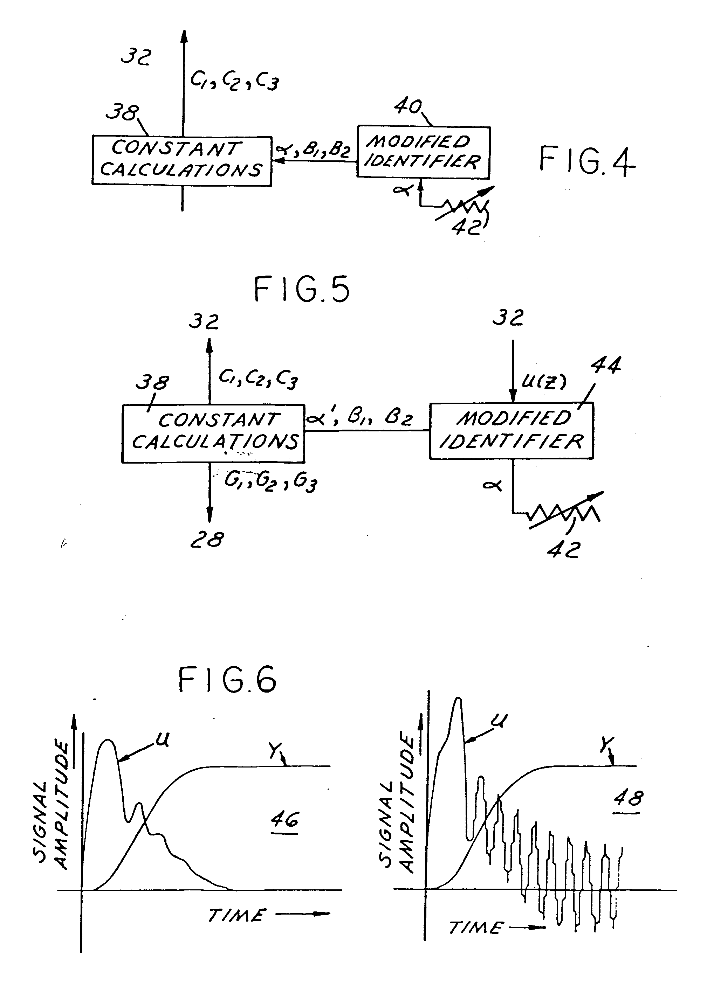

Fig. 4 illustrates a modification to Fig. 1 wherein a modified identifier 40 receives a single input indicative of constant $\alpha$ from an adjustable resistor 42. Constants $B_1$, $B_2$ are calculated per equations (18)-(20). This modification is thus semi-automatic in that all system constants are derived from a single operator-adjustable input. It will be appreciated that the $\alpha$-indicating input to identifier 40 could also be fed from a remotely located control system or the like. The modification of Fig. 4 has the advantage of eliminating the time consuming solution for from matrix equation (14).

The embodiment of Fig. 4 may be made semi-adaptive by means of the modification of Fig. 5 wherein the modified identifier 44 additionally receives an input U(Z) from compensator 32. In Fig. 6, graph 46 illustrates position Y versus drive signal U (in the time domain) for an optimally tuned system. It will be noted that drive signal U, which is a function of error E, is substantially free of oscillations. Graph 48 in Fig. 6 illustrates response of a system which is not properly tuned, i.e. wherein $\alpha$ set by resistor 42 (Fig.5) is not properly set. Modified identifier 44 tunes the $\alpha$ input from resistor 42 to provide a modified constant $\alpha'$, as well as constants $B_1$, $B_2$, to calculator 38. This can be accomplished by counting peaks in the U input signal during a set-up operation and modifying the $\alpha$ input to minimize such peaks. As another possibility, the length of the U signal curve can be measured by time integration during the set-up operation, and the $\alpha$ input is internally modified to minimize such length. In all of these possibilities, modified identifier 44 is self-adaptive in set-up and continuous operation.

Figs. 7 and 8 are an electrical schematic drawing of a presently preferred embodiment of a microprocessor-based electronic controller, and a corresponding computer program in Intel 8051 machine language for implementing the embodiments of Figs. 4 and 5 (operator selectable) was developed. The R-(Z), U(Z) and $\alpha$ inputs are connected through multiplexer circuitry 50 to a serial input port of an Intel 8051 microprocessor 52. Microprocessor 52, which possesses internal program memory, is connected through a latch 54 and a decoder 56 to a pair of 4K memory modules 58, 60. The output port of microprocessor 52 is connected through an amplifier 62 to the valve actuator coil 64 of plant 12. It will be appreciated that identifier 40 (Fig. 4) or 44 (Fig. 5), compensators 28, 32, constant calculator 38 and zero order hold circuit 33 illustrated functionally in Figs. 4 and 5 are all contained within programmed microprocessor 52 and associated memory.

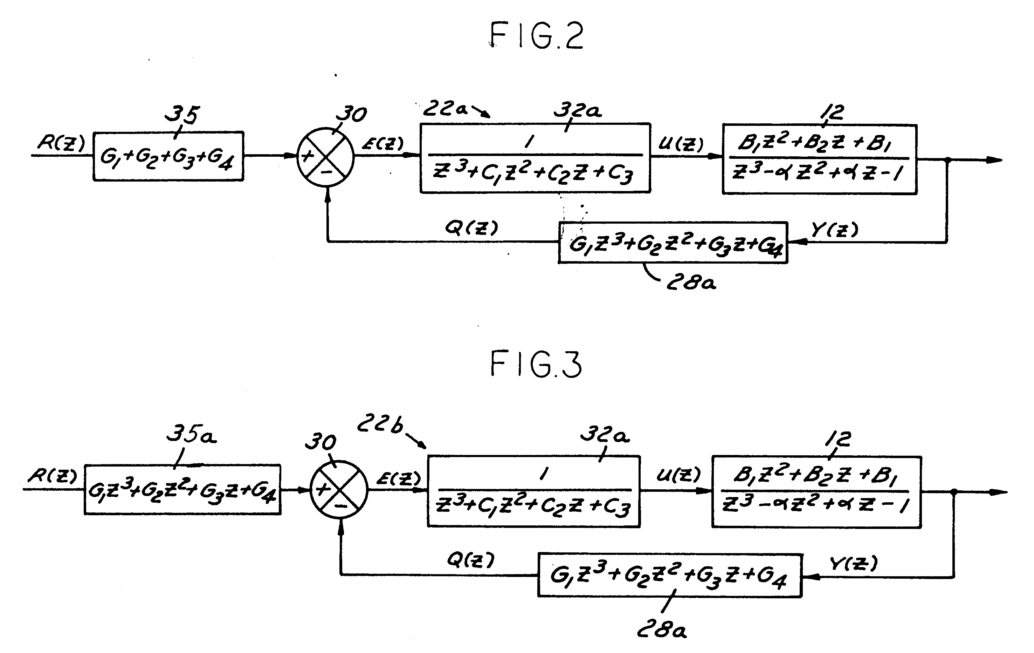

Fig. 2 illustrates the further development 22a to Fig. 1, namely the compensators 32, 28 have got an additional order in the sampled data domain and are referenced 32a and 28a, respectively, and an input amplifier 35 is provided having gain equal to $G_1 + G_2 + G_3 + G_4$. The diagram is to be completed by the estimating means 36 (Fig. 1) or 40 (Fig. 4) or 44 (Fig. 5) and the constant calculating means 38. These features provide the ability to select gain independently of other variables. For the embodiment of Fig. 2, static gain $G_s$ is given by the equation:

$$G_s = \frac{G_1 + G_2 + G_3 + G_4}{1 + C_1 + C_2 + C_3} \qquad (21).$$

Again choosing pole placement at -a, the constants $G_1$-$G_4$ and $C_1$-$C_3$ are given by the matrix equation:

$$
\begin{bmatrix}
B_1 & 0 & 0 & 0 & 1 & 0 & 0 \\
B_2 & B_1 & 0 & 0 & -\alpha & 1 & 0 \\
B_1 & B_2 & B_1 & 0 & \alpha & -\alpha & 1 \\
0 & B_1 & B_2 & B_1 & -1 & \alpha & -\alpha \\
0 & 0 & B_1 & B_2 & 0 & -1 & \alpha \\
0 & 0 & 0 & B_1 & 0 & 0 & -1 \\
1 & 1 & 1 & 1 & -G_s & -G_s & -G_s
\end{bmatrix}
\begin{bmatrix}
G_1 \\ G_2 \\ G_3 \\ G_4 \\ C_1 \\ C_2 \\ C_3
\end{bmatrix}
=
\begin{bmatrix}
\alpha - 6e^{-at} \\
-\alpha + 15e^{-2at} \\
1 - 20e^{-3at} \\
15e^{-4at} \\
6e^{-5at} \\
-e^{-6at} \\
G_s
\end{bmatrix}
\qquad (22)
$$

Fig. 3 illustrates a modification 22b to the embodiment of Fig. 2 wherein, by adding input command compensation at 35a in the time domain, velocity constant $V_c$ can be made equal to static gain $G_s$. This helps reduce following error when a ramp input R is commanded. Equations (21) and (22) apply to Fig. 3 both for $G_s$ and $V_c$. Thus, in general, velocity constant is determined by series amplifier/compensators 32a, 35a and the transfer function (Equation (2)) of plant 12, while static gain is determined by feedback compensator 28a.

**Claims**

1.  A power servo system comprising an electrohydraulic actuator (12) adapted to variably actuate a load and having a predetermined first polynomial transfer function being given in the sample-data domain by the expression

$$\frac{B_1 Z^2 + B_2 Z + B_1}{Z^3 - \alpha Z^2 + \alpha Z - 1}$$

with a plurality of first constants $\alpha$, $B_1$, $B_2$ related to dynamic behavior characteristics at said actuator (12),
sensor means (14) responsive to said actuator means (12) for providing a sensor signal (Y) as a function of actuation at said actuator means (12) and connected to means (26) for periodically sampling said sensor signal (Y) to provide a sampled sensor signal ( Y(Z) ),
sampled-data servo control means (20) including means (24) for receiving and providing a command signal ( R(Z) ),
means (30) for providing an error signal ( E(Z) ) in view of controlling said actuator means (12) as a combined function of said command signal ( R(Z) ) and said sensor signal ( Y(Z) ) to obtain a preselected response characteristic at said actuator means (12),

feedback compensation means (28) receiving said sampled sensor signal ( Y(Z) ) and providing a feedback signal ( Q(Z) ) and having a preselected second transfer function coordinated with said first transfer function to obtain said preselected response characteristics, said second transfer function in the sampled-data domain being a polynomial having a number of second constants ($G_1$, $G_2$, $G_3$) which vary as functions of said first constants ($\alpha$, $B_1$, $B_2$),

first estimating means (36, 40, 44) for estimating said first constants ($\alpha$, $B_1$, $B_2$),

second calculating means (38) responsive to said first means (36, 40, 44) and coupled to said feedback compensation means (28) for calculating said second constants ($G_1$, $G_2$, $G_3$) as a function of estimated first constants, and

series compensating means (32) responsive to said error signal ( E(Z) ) to provide a drive signal ( U(Z) ) to said actuator means (12),

said series compensation means (32) having a third polynomial transfer function with a number of third constants ($C_1$, $C_2$, $C_3$) which vary as functions of said first constants ($\alpha$, $B_1$, $B_2$), and which in the sampled-data domain is given by the expression:

$$\frac{1}{Z^3 + C_1 Z^2 + C_2 Z + C_3} \quad ,$$

characterized in that
said second transfer function is given by the expression:

$G_1 Z^3 + G_2 Z^2 + G_3 Z + G_4$ .

2. The power servo system according to claim 1, wherein said means (24) for receiving and providing said command signal ( R(Z) ) includes amplifying means (35) having a transfer function which varies as a function of the sum of $G_1$, $G_2$, $G_3$ and $G_4$ and wherein static gain $G_5$ given by the equation

$$G_S = \frac{G_1 + G_2 + G_3 + G_4}{1 + C_1 + C_2 + C_3}$$

can be selected independently of other variables and is related to said constants $\alpha$, $B_1$ and $B_2$ by the expression:

$$
\begin{bmatrix}
B_1 & 0 & 0 & 0 & 1 & 0 & 0 \\
B_2 & B_1 & 0 & 0 & -\alpha & 1 & 0 \\
B_1 & B_2 & B_1 & 0 & \alpha & -\alpha & 1 \\
0 & B_1 & B_2 & B_1 & -1 & \alpha & -\alpha \\
0 & 0 & B_1 & B_2 & 0 & -1 & \alpha \\
0 & 0 & 0 & B_1 & 0 & 0 & -1 \\
1 & 1 & 1 & 1 & -G_S & -G_S & -G_S
\end{bmatrix}
\begin{bmatrix}
G_1 \\ G_2 \\ G_3 \\ G_4 \\ C_1 \\ C_2 \\ C_3
\end{bmatrix}
=
\begin{bmatrix}
\alpha - 6e^{-at} \\
-\alpha + 15e^{-2at} \\
1 - 20e^{-3at} \\
15e^{-4at} \\
6e^{-5at} \\
-e^{-6at} \\
G_S
\end{bmatrix}
\quad (22)
$$

3. The system set forth in claim 1 wherein said means (24) for receiving and providing said command signal ( R(Z) ) includes amplifying means (35a) having a transfer function in the sampled data domain given by the expression:

$$G_1 Z^3 + G_2 Z^2 + G_3 Z + G_4$$

said system having a velocity gain constant $V_c$ equal to static gain constant $G_s$ as defined in claim 2.

**Revendications**

1. Un servosystème de puissance comprenant :
   - un dispositif électrohydraulique d'actionnement (12) adapté pour actionner de façon variable une charge et comportant une première fonction de transfert polynomiale prédéterminée qui est définie dans le domaine de données-échantillonnées par l'expression :

$$\frac{B_1 Z^2 + B_2 Z + B_1}{Z^3 - \alpha Z^2 + \alpha Z - 1}$$

   avec une pluralité de premières constantes $\alpha$, $B_1$, $B_2$ en relation avec des caractéristiques de comportement dynamique dudit dispositif d'actionnement (12),
   - des moyens de captage (14) répondant audit dispositif d'actionnement (12) pour produire un signal de captage (Y) en fonction d'un actionnement dans ledit dispositif d'actionnement (12), et relié à des moyens (26) pour échantillonner périodiquement ledit signal de captage (Y) de façon à obtenir un signal de captage échantillonné (Y(Z)),
   - des moyens (20) de servocommande avec données-échantillonnées, comprenant des moyens (24) pour recevoir et fournir un signal de commande (R(Z)),
   - des moyens (30) pour fournir un signal d'erreur (E(Z)) en vue d'une commande dudit dispositif d'actionnement (12) sous la forme d'une fonction combinée dudit signal de commande (R(Z)) et dudit signal de captage (Y(Z)) afin d'obtenir une caractéristique de réponse présélectionnée dans ledit dispositif d'actionnement (12),
   - des moyens (28) de compensation de réaction recevant ledit signal de captage échantillonné (Y-(Z)) et fournissant un signal de réaction (Q(Z)), et disposant d'une seconde fonction de transfert présélectionnée qui est coordonnée avec ladite fonction de transfert afin d'obtenir lesdites caractéristiques de réponse présélectionnées, ladite seconde fonction de transfert dans le domaine de données-échantillonnées étant un polynome comportant un certain nombre de secondes constantes ($G_1$, $G_2$, $G_3$) qui varient comme des fonctions desdites premières constantes ($\alpha$, $B_1$, $B_2$),
   - des premiers moyens d'estimation (36, 40, 44) pour effectuer l'estimation desdites premières constantes ($\alpha$, $B_1$, $B_2$),
   - des seconds moyens de calcul (38) répondant auxdits premiers moyens d'estimation (36, 40, 44) et reliés auxdits moyens de compensation (28) pour calculer lesdites secondes constantes ($G_1$, $G_2$, $G_3$) comme une fonction de premières constantes estimées, et
   - des moyens (32) de compensation en série répondant audit signal d'erreur (E(Z)) pour appliquer un signal d'activation (U(Z)) audit dispositif d'actionnement (12),
   - lesdits moyens (32) de compensation en série disposant d'une troisième fonction de transfert polynomial comportant un certain nombre de troisièmes constantes ($C_1$, $C_2$, $C_3$) qui varient comme des fonctions desdites premières constantes ($\alpha$, $B_1$, $B_2$), cette fonction étant définie, dans le domaine de données-échantillonnées, par l'expression :

$$\frac{1}{Z^3 + C_1 Z^2 + C_2 Z + C_3}$$

   - caractérisé en ce que :
   - ladite seconde fonction de transfert est définie par l'expression :

$$G_1 Z^3 + G_2 Z^2 + G_3 Z + G_4$$

2. Le servosystème de puissance selon la revendication 1, dans lequel lesdits moyens (24) pour recevoir et fournir ledit signal de commande (R(Z)) comprennent un moyen amplificateur (35) disposant d'une fonction de transfert qui varie en fonction de la somme de $G_1$, $G_2$, $G_3$ et $G_4$ et dans lequel le gain statique $G_s$, défini par l'équation :

$$G_s = \frac{G_1 + G_2 + G_3 + G_4}{1 + C_1 + C_2 + C_3}$$

peut être sélectionné indépendamment d'autres variables et est lié auxdites constantes $\alpha$, $B_1$ et $B_2$ par l'expression :

$$
\begin{bmatrix}
B_1 & 0 & 0 & 0 & 1 & 0 & 0 \\
B_2 & B_1 & 0 & 0 & -\alpha & 1 & 0 \\
B_1 & B_2 & B_1 & 0 & \alpha & -\alpha & 1 \\
0 & B_1 & B_2 & B_1 & -1 & \alpha & -\alpha \\
0 & 0 & B_1 & B_2 & 0 & -1 & \alpha \\
0 & 0 & 0 & B_1 & 0 & 0 & -1 \\
1 & 1 & 1 & 1 & -G_s & -G_s & -G_s
\end{bmatrix}
\begin{bmatrix}
G_1 \\ G_2 \\ G_3 \\ G_4 \\ C_1 \\ C_2 \\ C_3
\end{bmatrix}
=
\begin{bmatrix}
\alpha - 6e^{-at} \\
-\alpha + 15e^{-2at} \\
1 - 20e^{-3at} \\
15e^{-4at} \\
6e^{-5at} \\
-e^{-6at} \\
G_s
\end{bmatrix}
\quad (22)
$$

3. Le système selon la revendication 1, dans lequel lesdits moyens (24) pour recevoir et fournir ledit signal de commande (R(Z)) comprennent un moyen amplificateur (35a) disposant d'une fonction de transfert dans le domaine de données-échantillonnées, cette fonction étant définie par l'expression :

$$G_1 Z^3 + G_2 Z^2 + G_3 Z + G_4$$

ledit système ayant une constante de gain dynamique $V_c$ qui est égale à la constante de gain statique $G_s$ comme défini dans la revendication 2.

**Patentansprüche**

1. Leistungsservosystem mit folgenden Merkmalen:
eine elektrohydraulische Betätigungseinrichtung (12) ist zur variablen Betätigung einer Last eingerichtet und weist eine vorbestimmte erste polynomale Übertragungsfunktion auf, die im Abtastdatenbereich durch folgenden Ausdruck wiedergegeben wird:

$$\frac{B_1 Z^2 + B_2 Z + B_1}{Z^3 - \alpha Z^2 + \alpha Z - 1} \quad ,$$

wobei eine Mehrzahl erster Konstanten $\alpha$, $B_1$, $B_2$ mit Charakteristiken des dynamischen Verhaltens bei der Betätigungseinrichtung (12) in Beziehung stehen;

eine Sensoreinrichtung (14) spricht auf die Betätigungseinrichtung (12) an und liefert ein Sensorsignal (Y) als Funktion der Betätigung bei der Betätigungseinrichtung (12) und ist mit einer Einrichtung (26) zum periodischen Abtasten des Sensorsignals (Y) verbunden, um das abgetastete Sensorsignal (Y(Z)) zu liefern;

eine Servosteuereinrichtung (20) für den Abtastdatenbereich umfaßt eine Einrichtung (24) zum Empfang und zur Bereitstellung einer Führungsgröße (R(Z));

eine Einrichtung (30) dient zur Abgabe eines Signals der Regelabweichung (E(Z)) im Hinblick auf Steuerung der Betätigungseinrichtung (12) als eine kombinierte Funktion der Führungsgröße (R(Z)) und des Sensorsignals (Y(Z)), um eine vorbestimmte Reaktionscharakteristik bei der Betätigungseinrichtung (12) zu erzielen;

eine Rückkopplungskompensationseinrichtung (28) empfängt das abgetastete Sensorsignal (Y(Z)) und liefert ein Rückkopplungssignal (Q(Z)) und weist eine vorbestimmte zweite Übertragungsfunktion auf, die der ersten Übertragungsfunktion zugeordnet ist, um die vorgewählte Reaktionscharakteristik zu erzielen, und zwar ist die zweite Übertragungsfunktion in dem Abtastdatenbereich ein Polynom mit einer Anzahl von zweiten Konstanten ($G_1$, $G_2$, $G_3$), die als Funktionen der ersten Konstanten ($\alpha$, $B_1$, $B_2$) variieren;

eine erste Abschätzeinrichtung (36, 40, 44) dient zur Abschätzung der ersten Konstanten ($\alpha$, $B_1$, $B_2$);

eine zweite Rechnereinrichtung (38) spricht auf die erste Einrichtung (36, 40, 44) an und ist mit der Rückkopplungskompensationseinrichtung (28) zur Errechnung der zweiten Konstanten ($G_1$, $G_2$, $G_3$) als Funktion der geschätzten ersten Konstanten verbunden;

eine in Serie geschaltete Kompensationseinrichtung (32) spricht auf das Regelabweichungssignal (E(Z)) an und liefert ein Antriebssignal (U(Z)) an die Betätigungseinrichtung (12);

die in Serien geschaltete Kompensationseinrichtung (32) weist eine dritte polynomale Übertragungsfunktion mit einer Anzahl von dritten Konstanten ($C_1$, $C_2$, $C_3$) auf, die sich als Funktionen der ersten Konstenten ($\alpha$, $B_1$, $B_2$) ändern und die in dem Abtastdatenbereich durch folgenden Ausdruck wiedergegeben wird:

$$\frac{1}{Z^3 + C_1 Z^2 + C_2 Z + C_3} \quad ,$$

dadurch gekennzeichnet,

daß die zweite Übertragungsfunktion durch den Ausdruck:

$$G_1 Z^3 + G_2 Z^2 + G_3 Z + G_4$$

wiedergegeben wird.

2.  Leistungsservosystem nach Anspruch 1,
dadurch gekennzeichnet, daß die Einrichtung (24) zum Empfang und zur Bereitstellung der Führungsgröße (R(Z)) eine Verstärkereinrichtung (35) mit einer Übertragungsfunktion aufweist, die sich als Funktion der Summe von $G_1$, $G_2$, $G_3$ und $G_4$ ändert und worin der statische Verstärkungsfaktor $G_s$ durch die Gleichung

$$G_s = \frac{G_1 + G_2 + G_3 + G_4}{1 + C_1 + C_2 + C_3}$$

gegeben ist und unabhängig von anderen Variablen ausgewählt werden kann und zu den Konstanten $\alpha$, $B_1$ und $B_2$ durch folgenden Ausdruck in Beziehung steht:

$$
\begin{bmatrix}
B_1 & 0 & 0 & 0 & 1 & 0 & 0 \\
B_2 & B_1 & 0 & 0 & -\alpha & 1 & 0 \\
B_1 & B_2 & B_1 & 0 & \alpha & -\alpha & 1 \\
0 & B_1 & B_2 & B_1 & -1 & \alpha & -\alpha \\
0 & 0 & B_1 & B_2 & 0 & -1 & \alpha \\
0 & 0 & 0 & B_1 & 0 & 0 & -1 \\
1 & 1 & 1 & 1 & -G_S & -G_S & -G_S
\end{bmatrix}
\begin{bmatrix}
G_1 \\ G_2 \\ G_3 \\ G_4 \\ C_1 \\ C_2 \\ C_3
\end{bmatrix}
=
\begin{bmatrix}
\alpha - 6e^{-at} \\
-\alpha + 15e^{-2at} \\
1 - 20e^{-3at} \\
15e^{-4at} \\
6e^{-5at} \\
-e^{-6at} \\
G_S
\end{bmatrix}
\qquad (22)
$$

3. System nach Anspruch 1,
   dadurch gekennzeichnet,
   daß die Einrichtung (24) zum Empfang und zur Bereitstellung der Führungsgröße (R(Z)) eine Verstärkereinrichtung (35a) mit einer Übertragungsfunktion einschließt, die in dem Abtastdatenbereich durch den Ausdruck:

   $$G_1 Z^3 + G_2 Z^2 + G_3 Z + G_4$$

   wiedergegeben wird, wobei das System eine Geschwindigkeitsverstärkungskonstante $V_c$ gleich der statischen Verstärkungskonstanten $G_s$ gemäß Anspruch 2 aufweist.

12

FIG.1

EP 0 274 046 B1

# FIG.2

$$R(z) \rightarrow \boxed{G_1+G_2+G_3+G_4}^{\ 35} \rightarrow \bigotimes_{30}^{+,-} \xrightarrow{E(z)} \boxed{\dfrac{1}{z^3+C_1z^2+C_2z+C_3}}^{22a\ \ 32a} \xrightarrow{u(z)} \boxed{\dfrac{B_1z^2+B_2z+B_1}{z^3-\alpha z^2+\alpha z-1}}^{12} \rightarrow$$

$$Q(z) \leftarrow \boxed{G_1z^3+G_2z^2+G_3z+G_4}^{28a} \xleftarrow{Y(z)}$$

# FIG.3

$$R(z) \rightarrow \boxed{G_1z^3+G_2z^2+G_3z+G_4}^{\ 35a} \rightarrow \bigotimes_{30}^{+,-} \xrightarrow{E(z)} \boxed{\dfrac{1}{z^3+C_1z^2+C_2z+C_3}}^{22b\ \ 32a} \xrightarrow{u(z)} \boxed{\dfrac{B_1z^2+B_2z+B_1}{z^3-\alpha z^2+\alpha z-1}}^{12} \rightarrow$$

$$Q(z) \leftarrow \boxed{G_1z^3+G_2z^2+G_3z+G_4}^{28a} \xleftarrow{Y(z)}$$

FIG.4

FIG.5

FIG.6

# FIG.7

# FIG.8